# EUROPÄISCHE PATENTSCHRIFT

(11) **EP 0 395 799 B1**
(45) Veröffentlichungstag und Bekanntmachung des Hinweises auf die Patenterteilung: **23.03.1994**
(21) Anmeldenummer: 89123515.2
(22) Anmeldetag: 20.12.1989
(51) Int. Cl.: H01C 17/06, C01G 55/00

(54) **Pyrochlorverwandte Oxide und sie enthaltende Widerstandsmassen**
Pyrochlore related oxide and resistive paste comprising it
Oxyde apparenté au pyrochlore et pâte résistante en comportant

(30) Priorität: 05.05.1989 DE 3914844
(43) Veröffentlichungstag der Anmeldung: 07.11.1990
(73) Patentinhaber: W.C. Heraeus GmbH, D-63405 Hanau (DE)
(72) Erfinder: Blanke, Inge, D-4518 Bad Laer 1 (DE); Burckhardt, Hans-Georg, Dr., D-6000 Frankfurt 60 (DE); Gora, Frieder, D-8750 Aschaffenburg (DE); Guldner, Karlheinz, Dr., D-8750 Aschaffenburg (DE); Dehoust, Jürgen, D-6450 Hanau 9 (DE); Modes, Christina, D-6100 Darmstadt (DE); Kemmler-Sack, Sybille, Prof. Dr., D-7400 Tübingen (DE); Schmidt, Joachim, D-6450 Hanau 1 (DE)
(74) Vertreter: Kühn, Hans-Christian

(56) Entgegenhaltungen:
- US-A- 3 960 778

## Beschreibung

Die Erfindung betrifft elektrisch leitfähige pyrochlorverwandte Oxide auf der Basis von Kupfer und/oder Silber, Blei, Wismut und Ruthenium und Widerstandsmassen, die diese Oxide enthalten.

Eine Vielzahl Ruthenium und Wismut enthaltender polynärer Oxide, die eine Pyrochlor-Kristallstruktur besitzen und sich aufgrund ihrer elektrischen Eigenschaften als Bestandteile für Widerstandsmassen eignen, ist bekannt.

So werden zum Beispiel in der deutschen Patentschrift 1 816 105 das elektrisch leitfähige, stabile Wismutruthenat Bi₂Ru₂O₇ mit Pyrochlor-Kristallstruktur und ähnliche Oxide des Pyrochlor- oder verzerrten Pyrochlor-Typs, die neben Wismut und Ruthenium noch weitere Metalle enthalten, beschrieben. Zusammen mit einem Glas werden sie zur Herstellung elektrischer Widerstände verwendet. Dabei kann der spezifische Widerstand der mit Bi₂Ru₂O₇ erhaltenen Widerstände bei Beibehaltung eines niedrigen Temperaturkoeffizienten in dem Bereich von +25°C bis +125°C über eine beträchtliche Breite variiert werden.

Elektrische Widerstandsmassen, die elektrisch leitfähige polynäre Oxide pyrochlorverwandter Kristallstruktur der allgemeinen Formel MₓM'₂₋ₓM''₂O_{7-z}, worin M Silber und/oder Kupfer, M' Wismut oder eine Mischung aus mindestens 1/2 Wismut plus bis zu 1/2 Cadmium, Blei, Yttrium, Thallium, Indium und/oder Seltenerdmetall und M'' Ruthenium, Iridium und/oder eine Mischung aus mindestens 3/4 Ruthenium und/oder Iridium und bis zu 1/4 Platin und/oder Titan und/oder Rhodium bedeuten, enthalten, werden in der deutschen Auslegeschrift 24 03 667 beschrieben. Die Oxide werden durch gemeinsames Erhitzen der benötigten Oxide oder der leicht oxidierbaren Metalle oder Salze unter oxidierenden Bedingungen bei etwa 600 - 1200°C hergestellt. In einer Menge von 5 - 90 % bilden sie zusammen mit einer Glasfritte oder einem anderen geeigneten anorganischen Bindemittel den Feststoffanteil der Widerstandsmassen, die - um druckfähig zu sein - außerdem einen flüssigen organischen Träger, zum Beispiel aus einer Lösung von Äthylcellulose in Terpineol, enthalten. Durch Einbrennen der Widerstandsmassen auf dielektrische Substrate, zum Beispiel aus Aluminiumoxid, bei etwa 650 - 950°C lassen sich Widerstände mit besonders niedrigem spezifischem Widerstand und einem flachen Ansprechen des spezifischen Widerstandes auf die Temperatur herstellen.

Das europäische Patent 110 167 betrifft ein Verfahren zur Herstellung von Pyrochlorverbindungen der allgemeinen Formel Bi₂₋ₓMₓB₂O_{7-z} mit M = Cadmium, Kupfer, Blei, Indium, Gadolinium und/oder Silber und B = Ruthenium und/oder Iridium, die eine große spezifische Oberfläche besitzen und für Widerstände mit relativ geringen Werten für den Temperaturkoeffizienten des Widerstandes in dem Bereich von +25°C bis +125°C ("Hot Temperature Coefficient of Resistance", HTCR) geeignet sind. Die Herstellung kann durch Glühen der Mischung aus dem Wismutoxidcarbonat Bi₂O₂CO₃, dem Dioxid des Rutheniums und/oder Iridiums und den Carbonaten der anderen Metalle in oxidierender Atmosphäre und Reinigen des Reaktionsproduktes mit verdünnter wässeriger Mineralsäure erfolgen.

Es ist die Aufgabe der Erfindung, elektrisch leitfähige Ruthenate mit Pyrochlor-Struktur der eingangs charakterisierten Art zu finden, die für die Herstellung von Dickschicht-Widerstandselementen geeignet sind, wobei die Differenz zwischen dem Temperaturkoeffizienten des Widerstandes in dem Bereich von +25°C bis +125°C und dem Temperaturkoeffizienten des Widerstandes in dem Bereich von -55°C bis +25°C ("Cold Temperature Coefficient of Resistance", CTCR), Δ TCR = HTCR - CTCR, möglichst gering sein soll. Die die Lösung der Aufgabe darstellenden pyrochlorverwandten Oxide sind gekennzeichnet durch die allgemeine Formel

MₓM'_{y}(Pb,Bi)_{2-x-y}Ru₂O_{7-z}

mit M = Kupfer und/oder Silber,
M' = Calcium, Strontium und/oder Barium,
0 < x ≦ 0,6,
0,1 ≦ y ≦ 1,0 und
0,1 ≦ z ≦ 1,0.

Vorzugsweise gilt
0,2 ≦ x ≦ 0,4,
0,5 ≦ y ≦ 1,0 und
0,1 ≦ z ≦ 1,0.

Besonders bewährt haben sich die Oxide, in denen das stöchiometrische Verhältnis von Blei zu Wismut größer als 1 und kleiner als 2 ist.

Bevorzugt werden die Oxide, die Blei und Wismut im stöchiometrischen Verhältnis von 1,5 : 1 und Kupfer oder Silber enthalten.

Die Oxide können, wie an sich bekannt (siehe zum Beispiel europäisches Patent 110 167), durch Festkörperreaktion oder durch Reaktion in flüssiger Phase hergestellt werden. Besonders bewährt hat es sich, die entsprechenden Metalle, Metalloxide, Metallcarbonate oder Mischungen daraus in Pulverform als Ausgangsstoffe einzusetzen und diese an Luft bei etwa 700 - 1000°C zu glühen.

Die Oxide bilden zusammen mit dielektrischen anorganischen Bindemitteln den Feststoffanteil von Widerstandsmassen. Im allgemeinen besteht der Feststoffanteil aus 5 - 90 Gewichts-% Oxiden und aus 10 - 95 Gewichts-% dielektrischen anorganischen Bindemitteln. Zur gemeinsamen Verwendung mit den Oxiden gemäß der Erfindung eignen sich alle für diesen Zweck bekannten Bindemittel, die meist Glasfritten darstellen. Widerstandsmassen, die die Oxide zusammen mit Bleialumosilicat-Glasfritten oder Bleialumoborosilicat-Glasfritten, vorzugsweise solchen aus 50 - 70 Gewichts-% PbO, 25 - 35 Gewichts-% SiO₂, 1 - 10 Gewichts-% Al₂O₃ und 1 - 10 Gewichts-% B₂O₃, enthalten, haben sich als besonders günstig erwiesen.

Die Widerstandsmassen enthalten neben den Feststoffen meist noch ein organisches Medium als flüssigen Träger und liegen dann als Pasten, die zum Beispiel im Siebdruck-Verfahren auf die dielektrischen Substrate aufgebracht werden können, vor. Der flüssige Träger besteht meist aus einer Lösung eines organischen Polymers, zum Beispiel aus Acrylharz oder Äthylcellulose, in einem organischen Lösungsmittel, zum Beispiel Terpineol oder Butylcarbitol (Butyldiglykolacetat), wie sie üblicherweise für Widerstandspasten verwendet wird.

Die Widerstandspasten werden in bekannter Weise durch Vermischen der sie bildenden Bestandteile hergestellt. Nach dem Aufdrucken der Pasten auf zum Beispiel aus Aluminiumoxid bestehende Substrate und dem Trocknen der Pasten durch Verdampfen des Lösungsmittels werden die bedruckten Substrate an Luft bei etwa 700 - 900°C eingebrannt. Bei diesen Einbrenntemperaturen zersetzen sich die Oxide nicht, wie die Röntgendiffraktogramme der eingebrannten Widerstandsschichten zeigen.

Die aus den Oxide gemäß der Erfindung enthaltenden Widerstandsmassen hergestellten Widerstandsschichten zeichnen sich durch kleine Δ TCR-Werte und außerdem durch kleine HTCR- und CTCR-Werte aus.

Zur näheren Erläuterung werden in den folgenden Beispielen die Herstellung von Oxiden gemäß der Erfindung, von Widerstandspasten, die eines dieser Oxide gemeinsam mit Bleialumosilicat- oder Bleialumoborosilicat-Glasfritten enthalten, und von Widerstandsschichten aus diesen Pasten beschrieben.

Zur Charakterisierung der Widerstandspasten werden die Schichtdicke d [µm], der Flächenwiderstand R_{f} [k Ω / □], der Temperaturkoeffizient des Widerstandes in dem Bereich von +25°C bis +125°C, HTCR [ppm/K], und der Temperaturkoeffizient des Widerstandes in dem Bereich von -55°C bis +25°C, CTCR [ppm/K], der durch Einbrennen der Pasten auf Aluminiumoxid-Substrate erhaltenen Widerstandsschichten bestimmt.

### Beispiel 1

Ca_{0,85}Cu_{0,25}Pb_{0,5}Bi_{0,4}Ru₂O_{7-z}

34,03 g CaCO₃, 7,96 g CuO, 44,64 g Pbo, 37,28 g Bi₂O₃ und 80,86 g Ru werden durch Mahlen in einer Kugelmühle miteinander vermischt. Die erhaltene Mischung wird in einen Tiegel aus Al₂O₃ gefüllt und darin 10 Stunden lang bei 750°C und dann noch 10 Stunden lang bei 850°C in einem Muffelofen geglüht. Nach dem Abkühlen wird das erhaltene Reaktionsprodukt in einer Kugelmühle fein vermahlen, bis es als Pulver mit einer durchschnittlichen Korngröße von 6 - 8 Mikrometer vorliegt. Die Röntgenstrukturanalyse des Reaktionsproduktes zeigt, daß es aus einer einzigen Phase mit Pyrochlor-Struktur besteht. In der Tabelle I werden der Netzebenenabstand d und die relative Röntgenintensität I/I_{O} angegeben.

Der spezifische Widerstand wird an unter Druck verfestigten Proben aus dem pulverförmigen Oxid nach der Vierpunkt-Methode bei Raumtemperatur und bei 77 K bestimmt. Er beträgt bei Raumtemperatur 4,8 . 10⁻⁴ Ω cm, bei 77 K 3,6 . 10⁻⁴ Ω cm.

**Tabelle I**

| d | I/I₀ |
|---|---|
| 5,936407 | 0,9 |
| 3,847390 | 1,9 |
| 3,256802 | 1,3 |
| 3,082717 | 1,5 |
| 2,946986 | 100,0 |
| 2,757214 | 1,2 |
| 2,713802 | 4,5 |
| 2,551787 | 35,2 |
| 2,342925 | 4,0 |
| 2,322472 | 1,3 |
| 2,086605 | 0,5 |
| 1,997906 | 0,5 |
| 1,967362 | 1,5 |
| 1,924425 | 1,1 |
| 1,867236 | 0,5 |
| 1,804707 | 40,7 |
| 1,684467 | 0,5 |
| 1,583696 | 0,5 |
| 1,539132 | 33,4 |
| 1,473673 | 8,4 |
| 1,357084 | 0,5 |
| 1,276656 | 4,1 |
| 1,171152 | 9,6 |
| 1,141683 | 7,1 |

### Beispiele 2 bis 7

Entsprechend wie das in Beispiel 1 beschriebene Oxid werden weitere Oxide hergestellt, die - ebenso wie das Oxid gemäß Beispiel 1 - durch ihre Gitterkonstanten a [Å] (1Å + 10 nm) charakterisiert werden (siehe Tabelle II).

**Tabelle II**

| Beispiel | Oxid | a [Å] |
|---|---|---|
| 1 | Ca_{0,85}Cu_{0,25}Pb_{0,5}Bi_{0,4}Ru₂O_{7-z} | 10,212 |
| 2 | Ca_{0,3}Cu_{0,6}Pb_{0,6}Bi_{0,5}Ru₂O_{7-z} | 10,236 |
| 3 | Ca_{1,0}Cu_{0,2}Pb_{0,5}Bi_{0,3}Ru₂O_{7-z} | 10,215 |
| 4 | Ca_{0,5}Cu_{0,25}Pb_{0,75}Bi_{0,5}Ru₂O_{7-z} | 10,230 |
| 5 | Ca_{0,5}Ag_{0,25}Pb_{0,75}Bi_{0,5}Ru₂O_{7-z} | 10,243 |
| 6 | Sr_{0,5}Cu_{0,25}Pb_{0,75}Bi_{0,5}Ru₂O_{7-z} | 10,258 |
| 7 | Ba_{0,5}Cu_{0,3}Pb_{0,7}Bi_{0,5}Ru₂O_{7-z} | 10,250 |

### Beispiel 8

### Widerstandspasten

a) Eine Mischung aus 19 Gewichts-% des in Beispiel 1 beschriebenen Oxids und 81 Gewichts-% einer Glasfritte aus 55 Gewichts-% PbO, 32,9 Gewichts-% SiO₂, 4,8 Gewichts-% B₂O₃ und 4,1 Gewichts-% Al₂O₃ mit einer durchschnittlichen Korngröße von 3 - 6 Mikrometer und eine 10 %ige Lösung von Äthylcellulose in Butylcarbitol werden im Verhältnis 3 : 1 auf einem Walzenstuhl zu einer Paste verarbeitet. Die Paste wird durch ein Edelstahl-Sieb (200 mesh) auf 50 x 50 x 0,63 Millimeter große Al₂O₃-Substrate gedruckt, 10 Minuten lang an Luft bei 150°C getrocknet und dann in einem Durchlaufofen 10 Minuten lang bei 850°C eingebrannt (Verweilzeit im Ofen insgesamt 1 Stunde).
   Die Schichtdicke, der auf eine Schichtdicke von 25 Mikrometer bezogene Flächenwiderstand, die ebenfalls auf eine Schichtdicke von 25 Mikrometer bezogenen Temperaturkoeffizienten des Widerstandes HTCR und CTCR der so hergestellten Widerstandsschichten und der Δ TCR-Wert werden in der Tabelle III angegeben.
b) Eine Mischung aus 20 Gewichts-% des in Beispiel 1 beschriebenen Oxids und 80 Gewichts-% einer Glasfritte aus 55 Gewichts-% PbO, 33,5 Gewichts-% SiO₂, 8,4 Gewichts-% B₂O₃ und 3,1 Gewichts-% Al₂O₃ mit einer durchschnittlichen Korngröße von 3 - 6 Mikrometer und eine 10 %ige Lösung von Äthylcellulose in Butylcarbitol werden im Verhältnis 3 : 1 auf einem Walzenstuhl zu einer Paste verarbeitet. Die Paste wird durch ein Edelstahl-Sieb (200 mesh) auf 50 x 50 x 0,63 Millimeter große Al₃O₃-Substrate gedruckt, 10 Minuten lang an Luft bei 150°C getrocknet und dann in einem Durchlaufofen 10 Minuten lang bei 850°C eingebrannt (Verweilzeit im Ofen insgesamt 1 Stunde).
   Die Schichtdicke, der auf eine Schichtdicke von 25 Mikrometer bezogene Flächenwiderstand, die ebenfalls auf eine Schichtdicke von 25 Mikrometer bezogenen Temperaturkoeffizienten des Widerstandes HTCR und CTCR der so hergestellten Widerstandsschichten und der Δ TCR-Wert werden in der Tabelle III angegeben.
c) Eine Mischung aus 25 Gewichts-% des in Beispiel 1 beschriebenen Oxids und 75 Gewichts-% einer Glasfritte aus 64 Gewichts-% PbO, 29 Gewichts-% SiO₂ und 7 Gewichts-% Al₂O₃ mit einer durchschnittlichen Korngröße von 3 - 6 Mikrometer und eine 10 %ige Lösung von Äthylcellulose in Butylcarbitol werden im Verhältnis 3 : 1 auf einem Walzenstuhl zu einer Paste verarbeitet. Die Paste wird durch ein Edelstahl-Sieb (200 mesh) auf 50 x 50 x 0,63 Millimeter große Al₂O₃-Substrate gedruckt, 10 Minuten lang an Luft bei 150°C getrocknet und dann in einem Durchlaufofen bei 850°C eingebrannt (Verweilzeit im Ofen insgesamt 1 Stunde).
   Die Schichtdicke, der auf eine Schichtdicke von 25 Mikrometer bezogene Flächenwiderstand, die ebenfalls auf eine Schichtdicke von 25 Mikrometer bezogenen Temperaturkoeffizienten des Widerstandes HTCR und CTCR der so hergestellten Widerstandsschichten und der Δ TCR-Wert werden in der Tabelle III angegeben.

**Tabelle III**

| Beispiel 8 | Oxid/Glas [Gew.-Teile] | d [µm] | R_{f}[kΩ/□] | HTCR [ppm/K] | CTCR [ppm/K] | Δ TCR[ppm/K] |
|---|---|---|---|---|---|---|
| a | 19/81 | 28 | 1050 | +70 | + 25 | 45 |
| b | 20/80 | 30 | 1210 | + 2 | - 65 | 67 |
| c | 25/75 | 25 | 1295 | -75 | -115 | 40 |

## Patentansprüche

1. Elektrisch leitfähige pyrochlorverwandte Oxide auf der Basis von Kupfer und/oder Silber, Blei, Wismut und Ruthenium, gekennzeichnet durch die allgemeine Formel
MₓM'_{y}(Pb,Bi)_{2-x-y}Ru₂O_{7-z}
mit M = Kupfer und/oder Silber,
M' = Calcium, Strontium und/oder Barium,
0 < x ≦ 0,6,
0,1 ≦ y ≦ 1,0 und
0,1 ≦ z ≦ 1,0.

2. Oxide nach Anspruch 1, gekennzeichnet durch
0,2 ≦ x ≦ 0,4
0,5 ≦ y ≦ 1,0 und
0,1 ≦ z ≦ 1,0.

3. Oxide nach Anspruch 1 oder 2, dadurch gekennzeichnet, daß das stöchiometrische Verhältnis von Blei zu Wismut größer als 1 und kleiner als 2 ist.

4. Oxide nach einem der Ansprüche 1 bis 3, dadurch gekennzeichnet, daß das stöchiometrische Verhältnis von Blei zu Wismut etwa 1,5 beträgt.

5. Oxide nach einem der Ansprüche 1 bis 4, dadurch gekennzeichnet, daß M Kupfer bedeutet.

6. Oxide nach einem der Ansprüche 1 bis 4, dadurch gekennzeichnet, daß M Silber bedeutet.

7. Elektrisch leitfähige pyrochlorverwandte Oxide auf der Basis von Kupfer und/oder Silber, Blei, Wismut und Ruthenium und organische Träger enthaltende Widerstandsmassen, dadurch gekennzeichnet, daß die elektrisch leitfähigen Oxide aus Oxiden nach einem der Ansprüche 1 bis 6 bestehen.

8. Widerstandsmassen nach Anspruch 7, dadurch gekennzeichnet, daß sie Glasfritten enthalten.

9. Widerstandsmassen nach Anspruch 8, dadurch gekennzeichnet, daß die Glasfritten Bleialumosilicat-Glasfritten sind.

10. Widerstandsmassen nach Anspruch 8, dadurch gekennzeichnet, daß die Glasfritten Bleialumoborosilicat-Glasfritten sind.

11. Widerstandsmassen nach Anspruch 10, dadurch gekennzeichnet, daß die Glasfritten aus 50 - 70 Gewichts-% PbO, 25 - 35 Gewichts-% SiO₂, 1 - 10 Gewichts-% Al₂O₃ und 1 - 10 Gewichts-% B₂O₃ bestehen.

12. Widerstandsmassen nach einem der Ansprüche 8 bis 11, dadurch gekennzeichnet, daß sie einen Feststoffanteil enthalten, der aus 5 - 90 Gewichts-% Oxiden und 10 - 95 Gewichts-% Glasfritten besteht.

## Claims

1. Electrically conductive oxides related to pyrochlore on the basis of copper and/or silver, lead, bismuth and ruthenium, characterized by the general formula
MₓM'_{y} (Pb,Bi) _{2-x-y} Ru₂O_{7-z}
with M = copper and/or silver,
M' = calcium, strontium and/or barium,
O < x ≦ 0.6,
0.1 ≦ y ≦ 1.0 and
0.1 ≦ z ≦ 1.0.

2. Oxides according to Claim 1, characterised by
0.2 ≦ x ≦ 0.4
0.5 ≦ y ≦ 1.0 and
0.1 ≦ z ≦ 1.0.

3. Oxides according to Claim 1 or 2, characterised in that the stoichiometric relationship of lead to bismuth is greater than 1 and smaller than 2.

4. Oxides according to one of Claims 1 to 3, characterised in that the stoichiometric relationship of lead to bismuth amounts to approximately 1.5.

5. Oxides according to one of Claims 1 to 4, characterised in that M denotes copper.

6. Oxides according to one of Claims 1 to 4, characterized in that M denotes silver.

7. Resistance substances containing electrically conductive oxides related to pyrochlore on the basis of copper and/or silver, lead, bismuth and ruthenium and organic carriers, characterized in that the electrically conductive oxides consist of oxides according to one of Claims 1 to 6.

8. Resistance substances according to Claim 7, characterised in that they contain glass frits.

9. Resistance substances according to Claim 8, characterised in that the glass frits are lead aluminosilicate glass frits.

10. Resistance substances according to Claim 8, characterised in that the glass frits are lead aluminoborosilicate glass frits.

11. Resistance substances according to Claim 10, characterised in that the glass frits consist of 50 - 70 % by weight PbO, 25 - 35 % by weight SiO₂, 1 -10 % by weight Al₂O₃ and 1 -10 % by weight B₂O₃.

12. Resistance substances according to one of Claims 8 to 11, characterized in that they contain a solids component, which consists of 5 - 90 % by weight oxides and 10 - 95 % by weight glass frits.

## Revendications

1. Oxydes apparentés au pyrochlore électriquement conducteurs à base de cuivre et/ou d'argent, de plomb, de bismuth et de ruthénium, caractérisés par la formule générale:
MₓM'_{y}(Pb,Bi)_{2-x-y}Ru₂O_{7-z}
dans laquelle M = cuivre et/ou argent,
M' = calcium, strontium et/ou baryum,
0 < x ≦ 0,6,
0,1 ≦ y ≦ 1,0 et
0,1 ≦ z ≦ 1,0.

2. Oxydes selon la revendication 1, caractérisés en ce que
0,2 ≦ x ≦ 0,4
0,5 ≦ y ≦ 1,0 et
0,1 ≦ z ≦ 1,0.

3. Oxydes selon la revendication 1 ou 2, caractérisés en ce que le rapport stoechiométrique du plomb au bismuth est supérieur à 1 et inférieur à 2.

4. Oxydes selon l'une des revendications 1 à 3, caractérisés en ce que le rapport stoechiométrique du plomb au bismuth est approximativement égal à 1,5.

5. Oxydes selon l'une des revendications 1 à 4, caractérisés en ce que M représente le cuivre.

6. Oxydes selon l'une des revendications 1 à 4, caractérisés en ce que M représente l'argent.

7. Masse résistives contenant des oxydes apparentés au pyrochlore électriquement conducteurs à base de cuivre et/ou d'argent, de plomb, de bismuth et de ruthénium et des supports organiques, caractérisés en ce que les oxydes électriquement conducteurs consistent en oxydes selon l'une des revendications 1 à 6.

8. Masses résistives selon la revendication 7, caractérisées en ce qu'elles contiennent des frittes de verre.

9. Masses résistives selon la revendication 8, caractérisées en ce que les frittes de verre sont des frittes de verre d'aluminosilicate de plomb.

10. Masses résistives selon la revendication 8, caractérisées en ce que les frittes de verre sont des frittes de verre d'aluminoborosilicate de plomb.

11. Masses résistives selon la revendication 10, caractérisées en ce que les frittes de verre consistent en 50 à 70 % en poids de PbO, 25 à 35 % en poids de SiO₂, 1 à 10 % en poids de Al₂O₃ et 1 à 10 % en poids de B₂O₃.

12. Masses résistives selon l'une des revendications 8 à 11, caractérisées en ce qu'elles contiennent une proportion de solides consistant en 5 à 90 % en poids d'oxydes et en 10 à 95 % en poids de frittes de verre.
